# FASCICULE DE BREVET EUROPEEN

(11) **EP 4 113 294 B1**
(45) Date de publication et mention de la délivrance du brevet: **28.01.2026**
(21) Numéro de dépôt: 22181995.6
(22) Date de dépôt: 29.06.2022
(51) Int. Cl.: G06F 9/451, G06F 3/04842, G06F 8/34, G06F 9/445

(54) **GÉNÉRATEUR ET PROCÉDÉ DE GÉNÉRATION DE DEUXIÈMES TRAITEMENTS, ET DISPOSITIF DE FOURNITURE DE SERVICES L'UTILISANT**
GENERATOR UND VERFAHREN ZUR ERZEUGUNG VON ZWEITVERARBEITUNGEN, UND VORRICHTUNG ZUR BEREITSTELLUNG VON DIENSTEN, DIE DIESEN VERWENDET
GENERATOR AND METHOD FOR GENERATING SECOND TREATMENTS, AND DEVICE FOR SUPPLYING SERVICES USING SAME

(30) Priorité: 29.06.2021 FR 2106962
(43) Date de publication de la demande: 04.01.2023
(73) Titulaire: Orange, 92130 Issy-les-Moulineaux (FR)
(72) Inventeur: LE GAC CESBRON, Sylvie, 92326 CHATILLON (FR); MARTINEZ, Thierry, 92326 CHATILLON (FR); CHEVALLIER, Sébastien, 92326 CHATILLON (FR)

(56) Documents cités:
- WO-A1-2017/189638
- CAPPIELLO CINZIA ET AL: "Enabling End User Development through Mashups: Requirements, Abstractions and Innovation Toolkits", 7 June 2011, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 9 - 24, ISBN: 978-3-540-74549-5, XP047373751

## Description

### Domaine technique

L'invention concerne la génération de nouveaux services, en particulier de deuxièmes traitements fournissant des deuxièmes services à partir de premiers services existants et/ou d'objets connectés.

### État de la technique

A l'origine, la génération ou composition de services, aussi nommée « mashup » en anglais, fait référence à la combinaison de données et/ou de traitements de plusieurs sources, telles que des sites web, des applications, etc. permettant de créer un tout nouveau service à partir des éléments collectés. De manière plus large, la génération de services fait référence à la possibilité de mixer et chaîner plusieurs actions pour aboutir à un nouveau service.

La génération de services a trouvé ces dernières années un écosystème favorable dans le développement des interfaces de programmation d'applications, ou APIs pour « Application Programming Interfaces » en anglais, et dans l'intérêt de pouvoir interconnecter les services. Pour l'utilisateur, c'est concrètement un gain d'efficacité et de temps permis par l'enchaînement et l'automatisation d'actions issues de services et d'applications différentes.

Proposé sur le marché dit B2B pour « Business to Business » en anglais, c'est-à-dire le commerce électronique entre entreprises, cette capacité est soit proposée en tant que telle ou intégrée dans des offres métiers, notamment des suites logicielles, telles que Cisco Spark. Les interfaces de programmation sont alors conçues pour des utilisateurs avancés. Les « mashups » possibles adressent tant des applications de processus métier, de gestion d'information et de données que, plus récemment, des applications liées à des objets connectés.

Sur le marché dit B2C pour « Business to Consumer » en anglais, c'est-à-dire le commerce électronique mettant en relation les entreprises directement avec le consommateur, l'acteur le plus connu demeure IFTTT^{™}, qui est un service web permettant à ses utilisateurs de créer des chaines d'instructions à partir d'un catalogue d'APIs, bien que de grands équipementiers aient depuis intégrés des fonctions similaires d'orchestration dans leurs applications. Si la solution proposée par IFTTT est relativement simple d'utilisation, sa cible reste néanmoins des utilisateurs ayant un profil de technophile averti, car les utilisateurs doivent avoir connaissance de ce type de fonctionnalité.

Avec l'avènement des objets connectés, et plus particulièrement des objets connectés pour la maison intelligente ou « Smart Home » en anglais, la composition de services intégrée dans des applications de gestion de leurs équipements et objets connectés est également mise à disposition de l'utilisateur. Par exemple, Apple propose une interface de programmation appMaison^{™} pour créer des scénarios d'automatisation des équipements domotiques connectés. Plus récemment, Samsung a proposé une application SmartThings^{™} donnant la possibilité grâce à une automatisation personnalisée de créer des événements et scénarios.

Néanmoins, toutes ces interfaces de programmation proposent de créer les scénarios au moyen de listes textuelles ou visuelles. Or, la création de liste par elle-même, ainsi que l'intégration d'éléments dans la liste ne sont pas forcément faciles à appréhender pour les utilisateurs néophytes. En outre, leur complexité rend possible, même pour les utilisateurs avertis, des risques d'erreurs de composition entrainant des erreurs d'automatisation lors de la mise en œuvre du nouveau service ainsi composé.

WO 2017/189638 A1 décrit une interface utilisateur-concepteur de workflow visualisée au sein d'un browser. En particulier, un générateur de logique du workflow utilise les étapes du workflow sélectionnées et configurées par le développeur pour générer la logique qui sera par la suite invoquée pour une exécution. Cette logique peut invoquer une opération d'une ou plusieurs applications locales ou réseaux associées avec des étapes du workflow. De plus, un sélecteur d'étape permet de sélectionner des étapes de workflow de manière indépendante, puis de les ordonner en une séquence donnée.

### Exposé de l'invention

Un des buts de la présente invention est d'apporter des améliorations par rapport à l'état de la technique.

Un objet de l'invention est un générateur de deuxièmes traitements fournissant des deuxièmes services, le deuxième traitement comportant au moins une commande d'un dispositif électronique, la commande déclenchant une action du dispositif électronique parmi les actions suivantes :
- une exécution d'une étape d'un procédé de premier traitement fournissant un premier service,
- un contrôle du dispositif électronique,

le générateur de deuxièmes traitements comportant un générateur de commandes en fonction de plusieurs premières cartes et de plusieurs deuxièmes cartes sélectionnées indépendamment respectivement parmi un ensemble de premières cartes et un ensemble de deuxièmes cartes, chaque première carte étant associée à un connecteur logique apte à être exécuté lors de l'exécution d'un deuxième traitement et chaque deuxième carte étant associée à un élément parmi les éléments suivants : un premier service et un dispositif électronique connecté à un contrôleur apte à mettre en oeuvre le deuxième traitement,
le générateur de commandes générant au moins une commande en fonction d'un ordre dans lequel les premières cartes et deuxièmes cartes sélectionnées sont positionnées.

Ainsi, la génération du deuxième traitement étant simplifiée par l'utilisation de cartes sélectionnées, le risque d'erreur de commandes est réduit et des deuxièmes traitements plus complexes peuvent être générés.

Avantageusement, le générateur de deuxièmes traitements comporte une interface utilisateur, l'interface utilisateur étant apte à afficher l'ensemble de première carte et l'ensemble de deuxième carte, étant apte à recevoir une instruction de sélection de premières cartes et de deuxième carte en fonction d'une action d'un utilisateur.

Ainsi, la sélection de cartes est facilitée réduisant les commandes erronées : commandes du mauvais paramètres, commande du mauvais objet connecté, commande du mauvais service, etc. voire les déclenchements erronés de commandes : déclenchements de la mauvaise commandes ou déclenchement dans des conditions inappropriées.

Avantageusement, l'interface utilisateur comporte un récepteur d'instruction d'ordonnancement des premières cartes et deuxièmes cartes sélectionnées.

Avantageusement, l'interface utilisateur comporte au moins une première zone d'affichage d'une partie des premières cartes et deuxièmes cartes sélectionnées et une deuxième zone d'affichage du reste des premières cartes et deuxièmes cartes sélectionnées, la première zone d'affichage étant associé à un déclencheur et la deuxième zone d'affichage à un contrôleur activé par le déclencheur.

Avantageusement, les premières cartes et deuxièmes cartes sont des cartes virtuelles disponibles dans une base de cartes.

Avantageusement, les premières cartes et deuxièmes cartes sont des cartes physiques et le générateur de deuxièmes traitements est connecté à un identificateur des premières cartes et deuxièmes sélectionnées.

Avantageusement, le générateur de deuxièmes traitements comporte un analyseur de position des cartes connecté à un capteur de cartes, l'analyseur étant apte à fournir l'ordre des premières cartes et deuxièmes cartes sélectionnées.

Un objet de l'invention est aussi un dispositif de fourniture de services comportant :
- une base de traitements comportant au moins des premiers traitements;
- un processeur apte à mettre en oeuvre au moins un premier traitement ;
caractérisé en ce que le dispositif de fourniture de services comporte en outre :
- un générateur de deuxièmes traitements fournissant des deuxièmes services, le deuxième traitement comportant au moins une commande d'un dispositif électronique, la commande déclenchant une action du dispositif électronique parmi les actions suivantes :
   + une exécution d'une étape d'un procédé de premier traitement fournissant un premier service,
   + un contrôle du dispositif électronique,
   le générateur de deuxièmes traitements comportant un générateur de commandes en fonction de plusieurs premières cartes et de plusieurs deuxièmes cartes sélectionnées indépendamment respectivement parmi un ensemble de premières cartes et un ensemble de deuxièmes cartes, chaque première carte étant associée à un connecteur logique apte à être exécuté lors de l'exécution d'un deuxième traitement et chaque deuxième carte étant associée à un élément parmi les éléments suivants : un premier service et un dispositif électronique connecté à un contrôleur apte à mettre en oeuvre le deuxième traitement, le deuxième traitement généré étant apte à être mis en oeuvre par le processeur,
   le générateur de commandes générant au moins une commande en fonction d'un ordre dans lequel les premières cartes et deuxièmes cartes sélectionnées sont positionnées.

Avantageusement, le dispositif de fourniture de service comporte un enregistreur apte à mémoriser le deuxième traitement généré dans la base de traitements.

Un objet de l'invention est encore un procédé de génération d'un deuxième traitement fournissant des deuxièmes services, le deuxième traitement comportant au moins une commande d'un dispositif électronique, la commande déclenchant une action du dispositif électronique parmi les actions suivantes :
- une exécution d'une étape d'un procédé de premier traitement fournissant un premier service,
- un contrôle du dispositif électronique,

la génération de deuxièmes traitements comportant une génération de commandes en fonction de plusieurs premières cartes et de plusieurs deuxièmes cartes sélectionnées indépendamment respectivement parmi un ensemble de premières cartes et un ensemble de deuxièmes cartes, chaque première carte étant associée à un connecteur logique apte à être exécuté lors de l'exécution d'un deuxième traitement et chaque deuxième carte étant associée à un élément parmi les éléments suivants : un premier service et un dispositif électronique connecté à un contrôleur apte à mettre en oeuvre le deuxième traitement,
la génération de commandes générant au moins une commande en fonction d'un ordre dans lequel les premières cartes et deuxièmes cartes sélectionnées sont positionnées.

Ainsi, la génération du deuxième traitement étant simplifiée par l'utilisation de cartes sélectionnées, le risque d'erreur de commandes est réduit et des deuxièmes traitements plus complexes peuvent être générés. Par deuxième traitement plus complexe étant entendu une succession d'un plus grand nombre de commandes et/ou avec des déclenchements plus complexes de commandes c'est-à-dire avec des déclenchements comportant un plus grand nombre de conditions de déclenchement et/ou plus d'imbrications de conditions de déclenchement.

Avantageusement, la génération de deuxièmes traitements comporte plusieurs sélections de premières cartes parmi l'ensemble de premières cartes et, indépendamment des sélections de premières cartes, plusieurs sélections de deuxièmes cartes parmi l'ensemble de deuxième carte, une sélection étant fonction d'au moins une instruction de sélection.

Avantageusement, la génération de deuxièmes traitements comporte un ordonnancement des premières cartes et deuxièmes cartes sélectionnées en fonction d'au moins une instruction d'ordonnancement.

Avantageusement, l'instruction est fonction d'une action d'un utilisateur.

Avantageusement, le procédé de génération comporte un affichage au moyen d'une interface utilisateur d'une première zone d'affichage d'une partie des premières cartes et deuxièmes cartes sélectionnées indépendamment et d'une deuxième zone d'affichage du reste des premières cartes et deuxièmes cartes sélectionnées indépendamment, la première zone d'affichage étant associé à un déclencheur et la deuxième zone d'affichage à un contrôleur activé par le déclencheur.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un générateur de traitement ou d'un dispositif de fourniture de services et étant conçus pour commander l'exécution des différentes étapes de ce procédé.

L'invention vise donc aussi un programme comprenant des instructions de code de programme pour l'exécution des étapes du procédé de génération de deuxièmes traitements lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

### Brève description des dessins

Les caractéristiques et avantages de l'invention apparaîtront plus clairement à la lecture de la description, faite à titre d'exemple, et des figures s'y rapportant qui représentent :
Figure 1, un schéma simplifié d'un générateur de deuxièmes traitements selon l'invention ;
Figure 2, un schéma simplifié de dispositif de fourniture de services selon l'invention ;
Figure 3, un schéma simplifié d'architecture implémentant un générateur de deuxièmes traitements selon l'invention ;
Figure 4, un schéma simplifié d'un procédé de génération de deuxièmes traitements selon l'invention ;
Figure 5, un schéma simplifié d'interface utilisateur d'un générateur de deuxièmes traitements selon l'invention, l'interface utilisateur comportant une première zone d'affichage et une deuxième zone d'affichage ;
Figure 6, un schéma simplifié d'interface utilisateur d'un générateur de deuxièmes traitements dans lequel une deuxième carte est ajoutée ;
Figure 7a, un schéma simplifié d'interface utilisateur d'un générateur de deuxièmes traitements dans lequel un première carte et au moins une deuxième carte sont ajoutées dans la première zone illustrée par la figure 5 ;
Figure 7b, un schéma simplifié d'interface utilisateur d'un générateur de deuxièmes traitements dans lequel un première carte et au moins une deuxième carte sont ajoutées dans la deuxième zone illustrée par la figure 5 ;
Figure 8, un schéma simplifié d'interface utilisateur d'un générateur de deuxièmes traitements selon l'invention dans le cas d'un deuxième traitement dit « complexe ».

### Description des modes de réalisation

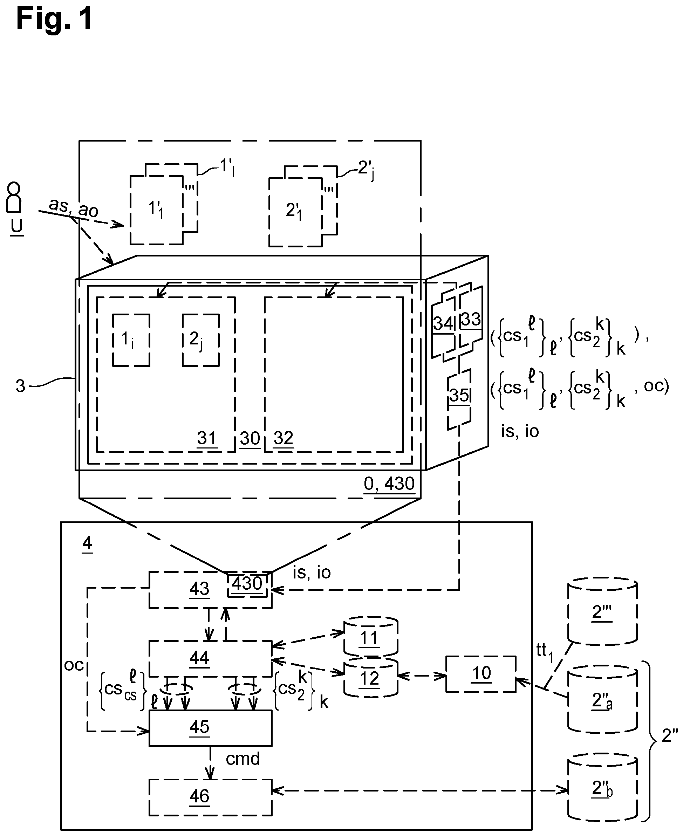

La figure 1 illustre un schéma simplifié d'un générateur de deuxièmes traitements selon l'invention.

Les deuxièmes traitements tt2 fournissent des deuxièmes services. Un deuxième traitement tt2 comporte au moins une commande cmd d'un dispositif électronique 9, la commande cmd déclenchant une action du dispositif électronique 9 parmi les actions suivantes :
- une exécution d'une étape d'un procédé de premier traitement tt1 fournissant un premier service,
- un contrôle du dispositif électronique.

Le générateur de deuxièmes traitements 4 comporte un générateur 45 de commandes en fonction de plusieurs premières cartes {CS₁^{l}}ₗ et de plusieurs deuxièmes cartes {cs₂^{k}}ₖ sélectionnées indépendamment respectivement parmi un ensemble de premières cartes {c₁ⁱ}ᵢ et un ensemble de deuxièmes cartes {c₂^{j}}ⱼ, chaque première carte étant associée à un connecteur logique apte à être exécuté lors de l'exécution d'un deuxième traitement et chaque deuxième carte étant associée à un élément parmi les éléments suivants : un premier service et un dispositif électronique connecté à un contrôleur apte à mettre en œuvre le deuxième traitement tt2.

Notamment, les deuxièmes cartes sont associées à une valeur d'un paramètre pouvant être associé à un premier service ou un dispositif électronique.

En particulier, le générateur de deuxièmes traitements 4 comporte une interface utilisateur 43 étant apte à recevoir une instruction de sélection *is* de premières cartes et de deuxième carte en fonction d'une action as d'un utilisateur U. Une instruction de sélection *is* indique une première ou une deuxième carte sélectionnée quelle(s) que soi(en)t la(les) première(s) et/ou deuxième(s) précédemment sélectionnée(s). Ainsi, les première(s) et deuxième(s) sont sélectionnées indépendamment. L'interface utilisateur 43 est apte à afficher l'ensemble de première carte {c₁ⁱ}ᵢ et l'ensemble de deuxième carte {c₂^{j}}ⱼ.

En particulier, le générateur de commandes 45 génère au moins une commande cmd en fonction d'un ordre *io* dans lequel les premières cartes et deuxièmes cartes sélectionnées sont positionnées.

En particulier, l'interface utilisateur 43 est apte à recevoir une instruction d'ordonnancement *io* des premières cartes et deuxièmes cartes sélectionnées.

Eventuellement, l'instruction d'ordonnancement est une instruction de position associée à instruction de sélection d'une carte. Par exemple, l'instruction de sélection *is* comporte une liste d'identifiants de cartes sélectionnées et éventuellement l'instruction d'ordonnancement est une liste de positions des cartes sélectionnées. Ainsi, la carte sélectionnée correspondant au nième identifiant de la liste sera associée à la nième position de la liste de positions.

Dans un mode de réalisation alternatif, les instructions de sélections et instructions d'ordonnancement sont couplées, l'interface utilisateur fournit alors des couples d'instructions, chaque couple correspondant à une carte sélectionnée et comportant un identifiant et une position de la carte sélectionnée.

En particulier, l'interface utilisateur 43 comporte au moins une première zone d'affichage 31 d'une partie des premières cartes et deuxièmes cartes sélectionnées et une deuxième zone d'affichage 32 du reste des premières cartes et deuxièmes cartes sélectionnées, la première zone d'affichage 31 étant associé à un déclencheur et la deuxième zone d'affichage 32 à un contrôleur 58 activé par le déclencheur.

En particulier, les premières cartes et deuxièmes cartes sont des cartes virtuelles disponibles dans une base de cartes 11, 12.

En particulier :
- les premières cartes et deuxièmes cartes sont des cartes physiques ; et
- le générateur de deuxièmes traitements 43 est connecté à un identificateur 33 des premières cartes et deuxièmes sélectionnées.

En particulier, le générateur de deuxièmes traitements 43 comporte un analyseur 34 de position des cartes connecté à un capteur 33 de cartes, l'analyseur 34 étant apte à fournir l'ordre *io* des premières cartes et deuxièmes cartes sélectionnées.

En particulier, préalablement à l'utilisation du générateur de commandes 45, des premières et deuxièmes cartes sont générées. Les premières cartes sont associées à des connecteurs logiques, par exemple « if », « or if », « then », « then after », « or », « and », « else », etc. Les deuxièmes cartes sont associées à des actions parmi les suivantes :
- une exécution d'une étape d'un procédé de premier traitement fournissant un premier service,
- un contrôle d'un dispositif électronique, notamment d'un équipement connecté, tel qu'un objet connecté (ampoule(s), enceinte(s), etc.), un équipement domotique (volet, porte, fenêtre, arrosage automatique, alarmes...), etc.

En particulier, les connecteurs logiques associées à des premières cartes sont stockés dans une base de connecteur 2‴, et les actions associées à des deuxièmes cartes sont stockées dans une ou plusieurs bases d'actions 2", 2"a, 2"b, notamment dans une base comportant à la fois des premiers traitements et des interfaces de contrôle de dispositif électronique 2"a ou des bases spécifiques (non illustrées) comportant respectivement des premiers traitements ou interfaces de contrôle de dispositif électronique.

A noter qu'un deuxième traitement généré à un instant t0 par le générateur de deuxièmes traitements 4 et stocké dans une base de deuxièmes traitements 2"b peut devenir, à un instant ultérieur t1=t0+T(T>0) pour le générateur de deuxième traitements un premier traitement à partir duquel une deuxième carte pourra être généré (notamment en temps réel, lorsque les cartes sont des cartes virtuelles, c'est-à-dire dès l'enregistrement du deuxième traitement à l'instant t0, et utilisée pour générer un nouveau deuxième traitement.

En particulier, les premières cartes et deuxièmes cartes ainsi générées sont enregistrées dans au moins un dispositif de stockage tel qu'une base de données, par exemple une base de cartes, voire respectivement une base de premières cartes 11 et une base de deuxièmes cartes 12.

En particulier, un générateur de cartes 10 génère les premières et/ou les deuxièmes cartes et les enregistre dans un dispositif de stockage 11, 12. Eventuellement, le générateur de deuxièmes traitements comporte le générateur de cartes 10 et, notamment, le dispositif de stockage des cartes générées 11, 12.

Lorsque les premières et deuxièmes cartes sont des cartes physiques respectivement 1₁...1_{I} et 2₁...2_{J}, le générateur de cartes 10 associe à au moins un identifiant de la première carte physique, respectivement de la deuxième carte physique, des connecteurs logiques, par exemple « if », « or if », « then », « then after », « or », « and », « else », etc., et des actions parmi les suivantes :
- une exécution d'une étape d'un procédé de premier traitement fournissant un premier service,
- un contrôle d'un dispositif électronique, notamment d'un équipement connecté, tel qu'un objet connecté (ampoule(s), enceinte(s), etc.), un équipement domotique (volet, porte, fenêtre, arrosage automatique, alarmes...), etc.

L'utilisateur U effectue une action as pour sélectionner des premières cartes et deuxièmes cartes, virtuelles ou physiques.

Dans le cas de cartes physiques, il dispose les cartes sélectionnées sur une surface plane 30, par exemple l'écran d'un terminal de communication ou un plateau électronique 3 ou une simple table 0. Un identificateur de cartes 33 est apte à détecter les cartes sélectionnées :
- soit parce que les cartes sélectionnées comportent un identificateur électronique: puce RFID, puce NFC... Dans ce cas, l'identificateur comporte un lecteur électronique, par exemple lecteur RFID, NFC...
- soit parce qu'est imprimé soit directement sur les cartes sélectionnées, soit sur une étiquette apposée sur ces cartes sélectionnées un identifiant tel qu'un code barre ou plus simplement une image ou un texte (mot ou ensemble de mots) associé respectivement au connecteur, au premier service fournit par le premier traitement, au dispositif électronique. Dans ce cas, l'identificateur 33 comporte une caméra capturant l'identifiant et un analyseur apte à déterminer le connecteur, le premier traitement, le dispositif électronique associé à la carte et, le cas échant, à reconnaitre préalablement à cette détermination, l'image ou le texte imprimé.

En particulier, soit le générateur de deuxièmes traitements 4, soit le terminal de communication 3 (connecté ou comportant le générateur de deuxièmes traitements 4) comporte l'identificateur 33.

Dans le cas de cartes virtuelles, l'utilisateur effectue l'action de sélection *as* sur un terminal de communication 3 (connecté ou comportant le générateur de deuxièmes traitements 4).

En particulier, l'utilisateur U ordonne *ao* les cartes sélectionnées. Par exemple, il dispose dans l'ordre (soit de gauche à droite, soit de haut en bas, etc.) un première carte associée à un premier connecteur, une deuxième carte associée, notamment, à un premier objet connecté, une autre première carte associé à un deuxième connecteur et une autre deuxième carte associée, notamment, à un premier service. En particulier, le sens de lecture des cartes par l'analyseur de position 34 est préétabli.

En particulier, l'utilisateur U dispose les premières et deuxièmes cartes dans deux zones distinctes 31 et 32 d'une zone 30, la première zone 31 est associée à un déclencheur et la deuxième zone 32 est associée à un contrôleur. Dans le cas d'un écran ou un plateau électronique 30 sur lequel les cartes physiques sont disposées ou d'un écran 30 respectivement d'un terminal de communication 3 connecté au générateur de deuxièmes traitements 4 ou d'une interface utilisateur 430 d'un générateur de deuxièmes traitements 430 sur lequel les cartes virtuelles sélectionnées sont affichées, l'écran ou plateau 30 est divisé en deux zones 31, 32 dites notamment zones d'affichage dans le cas de l'écran 30. Dans le cas d'une simple table 0, la zone de sélection 30 sur laquelle sont disposée les cartes sélectionnées est alors divisées en deux zones 31, 32.

Dans notre exemple ci-dessus, il dispose, dans la première zone 31, un première carte associée à un premier connecteur, une deuxième carte associée et, dans la deuxième zone 32, une autre première carte associé à un deuxième connecteur et une autre deuxième carte associée, notamment, à un premier service. Eventuellement, il les dispose de manière ordonnée dans chacune des deux zones.

Dans le cas des deux zones, l'analyseur de position 34 est non seulement apte à détecter l'ordre dans lequel les cartes sélectionnées sont disposées mais aussi dans quelle zone elles sont positionnées.

Lorsque l'identificateur 33, respectivement l'analyseur de position 34, ne sont pas implémentés dans le générateur de deuxièmes traitements 4 mais dans un dispositif distinct 3, tel qu'un terminal de communication ou un plateau électronique, le dispositif distinct 3 comporte un transmetteur 35 apte à transmettre au générateur de deuxièmes traitements les identifiants des premières cartes et deuxièmes cartes identifiées par l'identificateur 33 et, le cas échéant, leurs positions/ordres déterminés par l'analyseur de position 34, notamment sous forme d'une instruction de sélection is, respectivement une instruction d'ordonnancement io.

Dans le cas de cartes virtuelles, le transmetteur 35 est éventuellement apte à recevoir de l'interface utilisateur 43 des données multimédia représentant les cartes virtuelles aptes à être reproduites par l'écran 30 et, éventuellement, des données multimédia représentant la première zone 31 et la deuxième zone 32.

En particulier, le générateur de deuxièmes traitements 4 comporte le sélectionneur 44 apte à récupérer dans la ou les bases de cartes 11, 12 les premières cartes et deuxièmes cartes sélectionnées en fonction des instructions de sélection *is* fournit par l'interface utilisateur 430, en particulier par l'identificateur 33 et à les transmettre au générateur de commandes 45.

Eventuellement, dans le cas des cartes virtuelles, le sélectionneur 44 fournit des données multimédia représentant les cartes virtuelles sélectionnées à l'interface utilisateur qui déclenche la reproduction sur l'écran 30 des cartes sélectionnées.

En particulier, l'interface utilisateur fournit en outre au générateur de commandes 45 l'ordre des cartes sélectionnées oc.

Le générateur de commandes 45 élabore en fonction des données reçues : cartes sélectionnées et ordre des cartes au moins une commande ou une série de commandes.

Dans le cas où l'ordre des cartes comportent l'association d'une partie des cartes sélectionnées à une première zone et l'association du reste des cartes sélectionnées à une deuxième zone, la commande cmd générée par le générateur de commandes 45 comporte un commande de déclenchement destinée à être exécuté par un déclencheur et une commande de contrôle destiné à être mise en œuvre par un contrôleur, un processeur de traitement exécutant le deuxième traitement comportant le déclencheur et le contrôleur. Le déclencheur est apte à déclencher l'exécution de la commande de contrôle par le contrôleur en fonction du résultat de l'exécution de la commande de déclenchement.

En particulier, le générateur de deuxièmes traitements 4 comporte un enregistreur 46 de deuxième traitement permettant d'écrire le deuxième traitement dans un dispositif de stockage en particulier une base de traitement 2" voire une base de deuxième traitement 2"b.

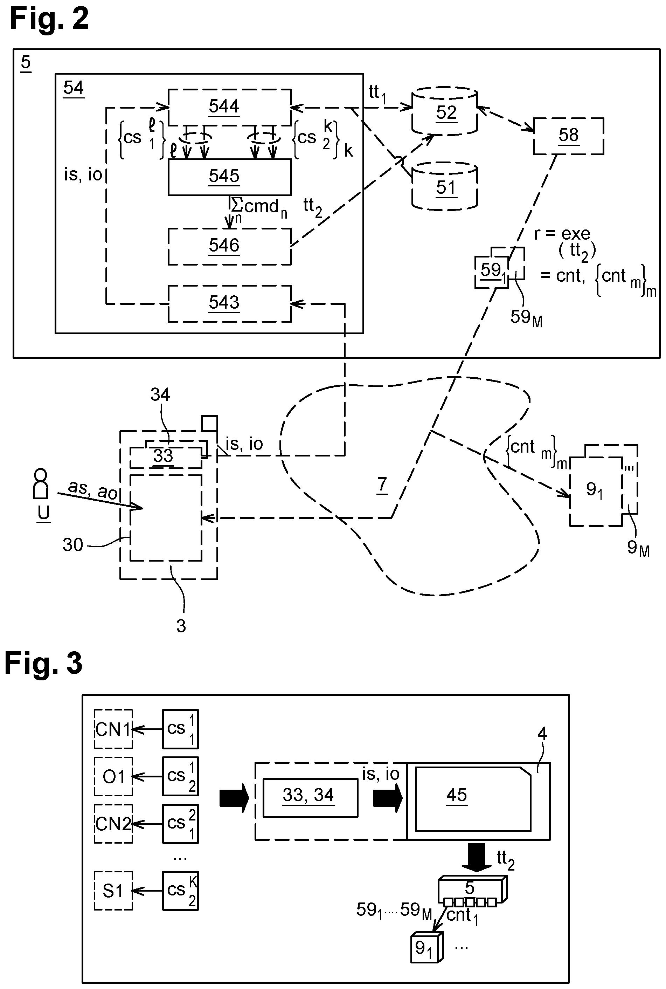

La figure 2 illustre un schéma simplifié de dispositif de fourniture de services selon l'invention.

Le dispositif de fourniture de services 5 comporte :
- une base de traitements 52" comportant au moins des premiers traitements tt1;
- un processeur 58 apte à mettre en œuvre au moins un premier traitement ;
- un générateur 54 de deuxièmes traitements tt2 fournissant des deuxièmes services, le deuxième traitement tt2 comportant au moins une commande cmd d'un dispositif électronique 5, 9₁... 9_{M}, la commande cmd déclenchant une action du dispositif électronique 5, 9₁...9_{M} parmi les actions suivantes :
   + une exécution d'une étape d'un procédé de premier traitement tt1 fournissant un premier service,
   + un contrôle du dispositif électronique 5, 9₁...9_{M}.

Le générateur 54 de deuxième traitement comporte un générateur 545 de commandes en fonction de plusieurs premières cartes {cs₁^{l}}ₗ et de plusieurs deuxièmes cartes {cs₂^{k}}ₖ sélectionnées indépendamment respectivement parmi un ensemble de premières cartes {c₁ⁱ}ᵢ et un ensemble de deuxièmes cartes {c₂^{j}}ⱼ, chaque première carte étant associée à un connecteur logique apte à être exécuté lors de l'exécution d'un deuxième traitement et chaque deuxième carte étant associée à un élément parmi les éléments suivants : un premier service et un dispositif électronique 9₁...9_{M} connecté à un contrôleur apte à mettre en œuvre le deuxième traitement tt2

En particulier, le dispositif de fourniture de service 5 comporte un enregistreur 545 apte à mémoriser le deuxième traitement généré tt2 dans la base traitements, notamment une base de deuxièmes traitement 52.

En particulier, le générateur 54 de deuxième traitement comporte un sélecteur 544 de premières cartes, notamment dans une base de premières cartes (non illustrées), et de deuxièmes cartes, notamment dans une base de deuxièmes cartes (non illustrées).

La base de deuxième cartes étant notamment préalablement établie à partir des premiers traitements de la base de traitement, notamment d'une base de premier traitement tt1 et, éventuellement, des deuxièmes traitements déjà générés et enregistrés dans une base de deuxième traitement tt2 qui deviennent pour le deuxième traitement en cours de génération des premiers traitements.

Le sélecteur 544 fournit au générateur 545 de commandes les premières cartes et deuxièmes cartes sélectionnées {cs₁^{l}}ₗ, {cs₂^{k}}ₖ.

En particulier, dans le cas où le dispositif de fourniture de services 5 est connecté à un terminal de communication 3 au moyen duquel l'utilisateur U sélectionne les cartes, le dispositif de fourniture de services 5 et/ou le générateur de deuxièmes traitements 5 comporte une interface utilisateur 545 qui reçoit une instruction de sélection is et, le cas échéant, une instruction d'ordonnancement io.

En particulier, le terminal de communication 3 comporte un écran 30 sur lequel sont affichées les cartes lorsqu'elles sont virtuelles, l'écran 30 est notamment un écran tactile permettant à l'utilisateur d'effectuer une action de sélection as voire d'ordonnancement ao directement sur les cartes affichées.

En particulier, le terminal de communication 3 comporte un identificateur 33 de cartes sélectionnées en fonction des cartes sélectionnées as sur l'écran 30 ou de cartes physiques positionnées sur le terminal ou sur une surface plane. L'identificateur 33 fournit des instructions de sélection *is* au sélecteur 544 notamment via l'interface utilisateur 543.

En particulier, le terminal de communication 3 comporte un analyseur de position 34 de cartes sélectionnées en fonction des cartes sélectionnées as sur l'écran 30 ou de cartes physiques positionnées sur le terminal ou sur une surface plane. L'analyseur de position 34 fournit des instructions d'ordonnancement *io* au générateur de commandes 545 notamment via l'interface utilisateur 543.

Le générateur de commandes 545 génère alors au moins une commande cmd, voire une série de commandes Σ*ₙ cmdₙ* en fonction des cartes sélectionnées {cs₁^{l}}ₗ, {cs₂^{k}}ₖ et, le cas échéant, de l'instruction d'ordonnancement *io* (éventuellement chaque position de l'instruction d'ordonnancement est couplée à une cartes sélectionnées et fournie par le sélecteur 544).

En particulier, l'utilisateur U peut requérir au moyen du terminal de communication 3 l'exécution du deuxième traitement tt2 ainsi généré par le dispositif de fourniture de services 5.

Le dispositif de fourniture de services 5 comporte notamment un processeur 58 apte à exécuter le ou les commandes du deuxième traitement et, le cas échéant, à lire ces commandes dans la base de traitements 52.

En particulier, le dispositif de fourniture de services 5 comporte au moins un contrôleur 59₁...59_{M} d'au moins un dispositif électronique 9₁...9_{M} connecté au dispositif de fourniture de services 5. Ainsi, lorsque le deuxième traitement tt2 comporte des commandes de contrôles de dispositif électronique, le processeur 58 est apte à déclencher au moins un contrôleur 59₁...59_{M} qui envoie un signal de contrôle cnt, {cntₘ}ₘ à au moins un dispositif électronique 9₁... 9_{M}. En particulier, le signal de contrôle est fonction de l'exécution du traitement par le processeur 58 r=exe(tt2).

En particulier, le processeur 58 consiste ou comporte un déclencheur de contrôleur 59₁...59_{M}. En particulier, le déclencheur 58 déclenche un contrôleur 59₁...59_{M} en fonction du résultat de l'exécution du traitement par le processeur 58 r=exe(tt2).

En particulier, le terminal de communication 3 est connecté au dispositif de fourniture de services 5 via un réseau de communication 7.

En particulier, le dispositif de fournitures de services 5 est au connecté à au moins un dispositif électronique 9₁...9_{M} soit directement, soit via un réseau de communication identique ou non au réseau de communication connectant le terminal de communication 3 au dispositif de fourniture de services 5.

La figure 3 illustre un schéma simplifié d'architecture implémentant un générateur de deuxièmes traitements selon l'invention.

Le générateur de deuxièmes traitements 4 comporte un générateur de commandes apte à générer au moins une commandes en fonction des premières cartes cs₁¹, cs₁²... et deuxièmes cartes sélectionnées cs₂¹... cs₂^{K}.

Les premières cartes sélectionnées cs₁¹, cs₁²... sont associées à des connecteurs CN1, CN2, et les deuxièmes cartes sélectionnées cs₂¹... cs₂^{K} sont associées à des dispositifs électroniques, tels que des objets connectés de l'Internet des objets, O1, ou à des premiers services S1.

En particulier, la au moins une commande générée par le générateur de commandes 45 est fournie sous la forme d'un jeu d'instructions, par exemple au moyen d'un code source tel que le code source suivant :

```
      IF <object 1><condition 1>
       AND <object 2><condition 2>
      THEN <object 3><action 3>
       AND <object 4><action 4>
```

En particulier, un identificateur de cartes sélectionnées 33 et, éventuellement, un analyseur de position 34 de cartes sélectionnées transmet des instructions de sélection *is* et, le cas échéant, des instructions d'ordonnancement *io* au générateur de deuxième traitement 4 en fonction d'actions de sélection as et, le cas échéant, d'ordonnancement ao de l'utilisateur sur les premières cartes et deuxièmes cartes.

En particulier, le générateur de deuxièmes traitement 4 comporte l'identificateur de cartes sélectionnées 33 et, éventuellement, un analyseur de position 34.

En particulier, un dispositif de gestion d'objets connectés 5, par exemple une plateforme de l'Internet des objets ou « loT pour Internet of Things » en anglais, exécute le deuxième traitement ainsi généré tt2. Le dispositif de gestion d'objets connectés 5 contrôle en fonction de l'exécution du deuxième traitement tt2 au moins un dispositif électronique 9₁, tel qu'un objet connecté.

En particulier, le dispositif de gestion d'objets connectés 5 comporte des interfaces de contrôles de dispositifs électroniques 59₁... 59_{M}. L'interface de contrôle 59₁ ou contrôleur contrôle l'objet connecté 9₁ en fonction du résultat de l'exécution par le dispositif de gestion 5 du deuxième traitement tt2 généré. Notamment, l'interface de contrôle 59₁ est déclenchée par le dispositif de gestion 5 en fonction de l'exécution de deuxième traitement tt2.

Dans le cas de cartes virtuelles, un utilisateur manipule sur une interface graphique 30 un jeu de cartes virtuelles comportant un ensemble de premières cartes et un ensemble de deuxièmes cartes. Eventuellement, il ajuste la position des cartes sélectionnées entre elles. Les premières et deuxièmes cartes sélectionnées permettent au générateur de commandes 45 de déterminer en fonction des connecteurs logiques, respectivement des dispositifs électroniques ou premiers services associées, et le cas échéant en fonction de leurs positions entre elles un deuxième traitement notamment sous la forme de « mashup » ou scénario.

Les premières cartes et deuxième cartes sont préalablement modélisées éventuellement au moyen d'un programme informatique.

En particulier, après chaque mouvement de carte, les cartes placées sont analysées par identificateur de cartes sélectionnées 33 et, éventuellement, un analyseur de position 34.

En particulier, un analyseur d'adéquation est apte à vérifier l'adéquation entre un emplacement et la carte que l'on souhaite y déposer. Par exemple, lorsque l'écran est divisée en deux zones dont une première zone associé à un déclencheur et une deuxième zone associé à un contrôleur, l'analyseur d'adéquation vérifie si la première carte positionnée dans la première zone est associé à un connecteur logique de condition, tel que IF, OR IF ..., respectivement si la première carte positionnée dans la deuxième zone est associé à un connecteur logique d'action, tel que THEN, THEN AFTER, ELSE... Eventuellement, l'identificateur de cartes sélectionnées 33 et, le cas échéant, l'analyseur de position 34 fournissent à l'analyseur d'adéquation les identifiants de cartes sélectionnées et, le cas échéant, leurs positions.

Eventuellement, l'identificateur de cartes sélectionnées 33 et, le cas échéant, l'analyseur de position 34 fournissent les identifiants de cartes sélectionnées et, le cas échéant, leurs positions au générateur de deuxièmes traitements 4 qui calcule et produit un deuxième traitement constitué par une ou plusieurs commandes ou suite de commandes à mettre en œuvre pour exécuter le deuxième traitement, c'est-à-dire pour tester les conditions et exécuter les actions si les conditions sont vérifiées.

En particulier, le deuxième traitement tt2 est exécuté par la plateforme loT 5 dotée de connecteurs 59₁...59_{M} apte à interroger et actionner/contrôler les objets connectés 9₁... Par exemple, les conditions prévues par le deuxième traitement tt2 sont vérifiées en interrogeant un ou plusieurs objets connectés et le contrôleur commande la mise en œuvre d'une action prédéfinie par le deuxième traitement si la condition est vérifiée.

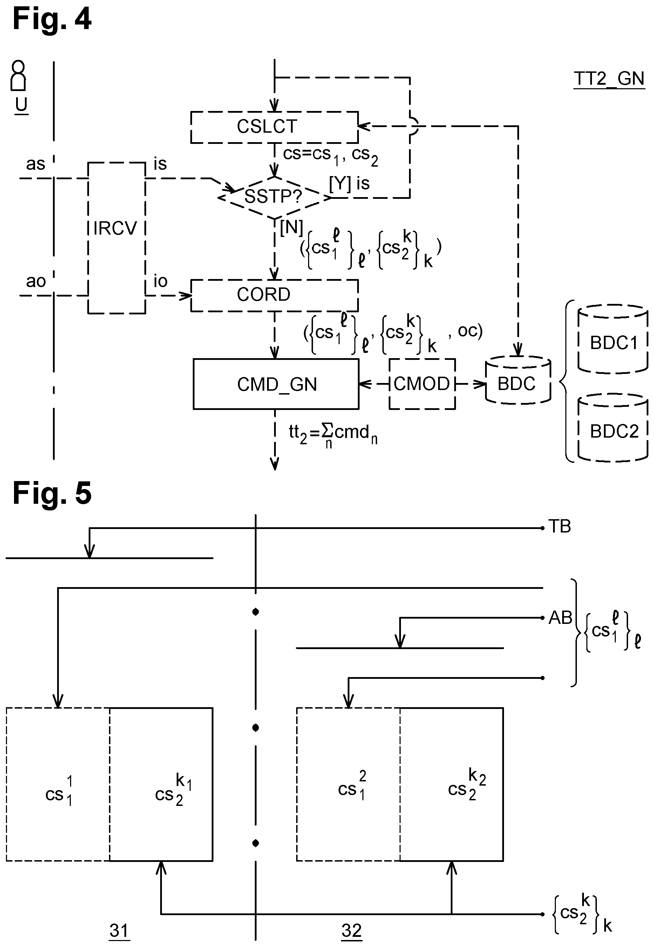

La figure 4 illustre un schéma simplifié d'un procédé de génération de deuxièmes traitements selon l'invention.

Le procédé de génération d'un deuxième traitement fournissant des deuxièmes services, le deuxième traitement tt2 comportant au moins une commande cmd d'un dispositif électronique, la commande cmd déclenchant une action du dispositif électronique parmi les actions suivantes :
- une exécution d'une étape d'un procédé de premier traitement fournissant un premier service,
- un contrôle du dispositif électronique,
la génération de deuxièmes traitements TT2_GN comportant une génération de commandes CMD_GN en fonction de plusieurs premières cartes {cs₁^{l}}ₗ et de plusieurs deuxièmes cartes {cs₂^{k}}ₖ indépendamment sélectionnées respectivement parmi un ensemble de premières cartes {c₁ⁱ}ᵢ et un ensemble de deuxièmes cartes {c₂^{j}}ⱼ, chaque première carte étant associée à un connecteur logique apte à être exécuté lors de l'exécution d'un deuxième traitement et chaque deuxième carte étant associée à un élément parmi les éléments suivants : un premier service et un dispositif électronique connecté à un contrôleur apte à mettre en œuvre le deuxième traitement tt2.

En particulier, la génération de deuxièmes traitements TT2_GN comporte plusieurs sélections CSLCT de premières cartes parmi l'ensemble de premières cartes et, indépendamment des sélections de premières cartes, plusieurs sélections de deuxièmes cartes parmi l'ensemble de deuxième carte, une sélection CSLCT étant fonction d'au moins une instruction de sélection is.

En particulier, la sélection CSLCT sélectionne les premières et deuxièmes cartes dans un dispositif de stockage, tel qu'une base de cartes BDC, voire respectivement une base de premières cartes BDC1 et une base de deuxièmes cartes BDC2.

En particulier, la génération de deuxièmes traitements TT2_GN comporte un ordonnancement CORD des premières cartes et deuxièmes cartes sélectionnées en fonction d'au moins une instruction d'ordonnancement io.

En particulier, l'instruction i, notamment l'instruction de sélection is, le cas échant l'instruction d'ordonnancement io, est fonction d'une action a d'un utilisateur U, notamment une action de sélection a, respectivement une action d'ordonnancement ao.

En particulier, le procédé de génération TT2_GN comporte une réception IRCV d'une action utilisateur as, ao fournissant respectivement une instruction de sélection is, une instruction d'ordonnancement io.

En particulier, le procédé de génération TT2_GN comporte un affichage au moyen d'une interface utilisateur d'une première zone d'affichage d'une partie des premières cartes et deuxièmes cartes sélectionnées indépendamment et d'une deuxième zone d'affichage du reste des premières cartes et deuxièmes cartes sélectionnées indépendamment, la première zone d'affichage étant associé à un déclencheur et la deuxième zone d'affichage à un contrôleur activé par le déclencheur.

En particulier, l'utilisateur U effectue une action de sélection *as* d'une première carte reçue IRCV par la génération de deuxièmes traitements TT2_GN. La réception IRCV transmet l'instruction de sélection *is* à la sélection CSLCT qui fournit au moins une carte sélectionnée cs=cs, cs₂ en fonction de l'instruction de sélection is.

Suite à cette sélection CSLCT, la génération de deuxièmes traitements TT2_GN vérifie SSTP ? si la réception IRCV a reçu une nouvelle action de sélection as de l'utilisateur U qui fournit une nouvelle instruction de sélection is. Si la vérification SSTP ? détecte une nouvelle instruction de sélection *is* alors [Y] la vérification SSTP ? transmet la nouvelle instruction de sélection *is* à la sélection CSLCT. Sinon [N], la vérification SSTP ? transmet à la génération de commande CMD_GN l'ensemble des cartes sélectionnées {cs₁^{l}}ₗ, {cs₂^{k}}ₖ par la sélection CSLCT.

En particulier, lorsque l'utilisateur U ordonne les cartes sélectionnées ao la réception IRCV fournit une instruction d'ordonnancement *io* fonction de leurs positions à un ordonnancement de carte CORD qui fournit l'ordre des cartes oc à la génération de commande CMD_GN.

Le générateur de commandes CMD_GN calcule et génère, en fonction des cartes sélectionnées {cs₁^{l}}ₗ, {cs₂^{k}}ₖ et éventuellement de leur ordre oc, au moins une commande cmd, voire une série de commandes Σ*ₙ cmdₙ* constituant le deuxième traitement tt2.

En particulier, la génération de deuxièmes traitements TT2_GN comporte une modélisation de cartes CMOD en fonction du deuxième traitement généré tt2. La ou les cartes modélisées à partir du deuxième traitement tt2 généré sont éventuellement stockées par exemple dans une base de carte BDC, notamment un base de deuxième carte BDC2.

Un mode de réalisation particulier du procédé de génération de deuxièmes traitements est un programme comprenant des instructions de code de programme pour l'exécution des étapes du procédé de génération de deuxièmes traitements lorsque ledit programme est exécuté par un processeur.

La figure 5 illustre un schéma simplifié d'interface utilisateur d'un générateur de deuxièmes traitements selon l'invention, l'interface utilisateur comportant une première zone d'affichage et une deuxième zone d'affichage.

Dans le cas où l'utilisateur U sélectionne quatre cartes : deux premières cartes et deux deuxièmes cartes et les disposent dans deux zones : une première zone 31 et une deuxième zone 32. La première zone permet de former un bloc TB de cartes de déclenchement, et la deuxième zone permet de forment un bloc AB de cartes d'action.

Par exemple, les cartes sont disposées sur une ligne. Eventuellement d'autres lignes de cartes peuvent être disposées par l'utilisateur U pour définir un deuxième traitement plus complexe (c'est-à-dire comportant plusieurs conditions et/ou plusieurs actions).

Eventuellement, les premières cartes et deuxièmes cartes ont un emplacement dédié où elles peuvent être placées par l'utilisateur U. Par exemple, les premières cartes sont placées sur des zones de premières cartes et/ou les premières cartes associées à un connecteur de condition sont placées sur la première zone ou zone de condition 31 et/ou les premières cartes associées à un connecteur d'action sont placées sur la deuxième zone ou zone d'action 32 et/ou les deuxièmes cartes sont placées sur les zones de deuxièmes cartes (le cas échéant, dans la première et la deuxième zone).

Dans l'exemple de la figure 5, la première carte sélectionnée cs₁¹ correspond par exemple à un connecteur de condition tel que « IF » et est placée en première position sur la ligne dans la première zone d'affichage pour former le bloc de condition TB. La deuxième carte sélectionnée cs₂^{k1} correspond par exemple à un premier service ou un objet connecté et est placée en deuxième position sur la ligne dans la première zone d'affichage pour former le bloc de condition TB.

Ainsi, le deuxième traitement tt2 ainsi généré vérifiera une condition relative au premier service ou à l'objet connecté associé à la deuxième carte sélectionnée cs₂^{k1} du bloc de condition TB lors de son exécution.

Une autre première carte sélectionnée cs₁² correspond par exemple à un connecteur d'action tel que « THEN » et est placée en troisième position sur la ligne dans la deuxième zone d'affichage pour former le bloc d'action AB. Une autre deuxième carte sélectionnée cs₂^{k2} correspond par exemple à un premier service ou un objet connecté, distinct ou non du premier service ou objet connecté du bloc de condition TB, et est placée en quatrième position sur la ligne dans la deuxième zone d'affichage pour former le bloc d'action AB.

Ainsi si la condition est vérifiée, le deuxième traitement tt2 ainsi généré déclenchera le contrôle de l'action prévue par l'autre deuxième carte sélectionnée cs₂^{k2}.

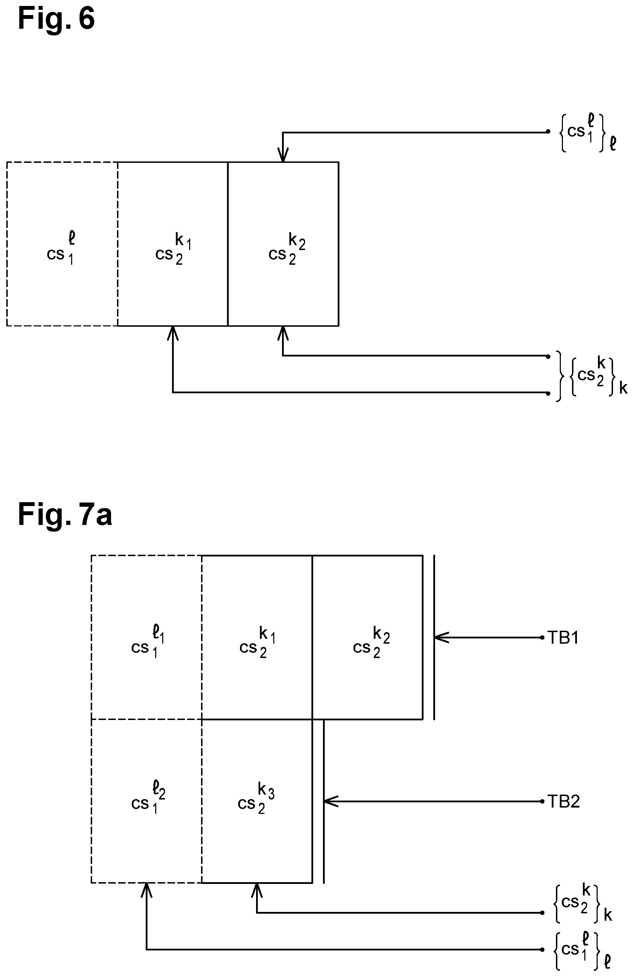

La figure 6 illustre un schéma simplifié d'interface utilisateur d'un générateur de deuxièmes traitements dans lequel une deuxième carte est ajoutée.

Des deuxièmes cartes additionnelles peuvent être ajoutées par l'utilisateur U à la disposition basique prévue par la figure 5. Cet ajout peut être effectué avant, après ou entre d'autres cartes déjà disposées sur la ligne. La figure 6 illustre l'ajout avant ou après des cartes déjà disposées.

Lorsqu'une deuxième carte est ajoutée par l'utilisateur U sur une ligne et dans un bloc comportant déjà une deuxième carte, la génération de commande crée un opérateur « AND » entre la nouvelle deuxième carte et la ou les deuxièmes cartes déjà posées dans le bloc TB, AB.

Ainsi, toutes les conditions générées à partir des deuxièmes cartes du bloc de condition TB sont reliées par l'opérateur « AND » et doivent être validées dans le bloc de condition pour déclencher l'exécution du bloc action AB. Par exemple, dans le cas où le bloc condition comporte une première carte associée au connecteur logique « IF » et des deuxièmes cartes associées respectivement à une température >30°, à une position de fenêtre ouverte et à 21 :00 heure, la mise en œuvre du deuxième traitement entraîne l'interrogation d'un thermomètre connecté de la fenêtre et de l'horloge pour vérifier si toutes les conditions sont vraies et déclencher dans ce cas le bloc action AB.

Ainsi, toutes les actions générées à partir des deuxièmes cartes du bloc d'action AB sont reliées par l'opérateur « AND » et seront exécutées soit successivement soit simultanément peu importe si l'une des actions n'aboutit pas ou se termine à un autre moment. Par exemple, dans le cas où le bloc condition comporte une première carte associée au connecteur logique « THEN » et des deuxièmes cartes associées respectivement un SMS, à un arrosage automatique, si la condition est validée par la mise en œuvre du deuxième traitement, elle déclenche à la fois une commande d'un envoi du SMS par un terminal de communication et une commande d'activation de l'arrosage automatique.

La figure 7a illustre un schéma simplifié d'interface utilisateur d'un générateur de deuxièmes traitements dans lequel une première carte et au moins une deuxième carte sont ajoutées dans la première zone illustrée par la figure 5.

L'utilisateur U peut créer ou modifier un nouveau sous-bloc de condition TB2 en plus du sous-bloc de condition TB1 (cs₁^{l1}, cs₂^{k1}, cs₂^{k2}). En particulier, l'utilisateur initie une nouvelle ligne ou un nouveau sous-bloc TB2 avec une première carte cs₁^{l2}, tel qu'une première carte connecté au connecteur logique « OR IF ». L'utilisateur ajoute une deuxième carte cs₂^{k3} de cette première carte cs₁^{l2}.

Si la nouvelle ligne est un nouveau bloc de condition TB2 indépendant des blocs de conditions précédentes TB1 ou suivants qui peut être testé dans le but d'exécuter le bloc d'action AB. En d'autres mots, dans l'exemple ci-dessus, la génération de deuxième traitement exécutera les actions seulement si toutes les conditions de la première ligne TB1 sont testées et validées ou si toutes les conditions de la ligne additionnelle TB2 sont testées et validées.

L'utilisateur peut ajouter le nombre de lignes de conditions qu'il souhaite.

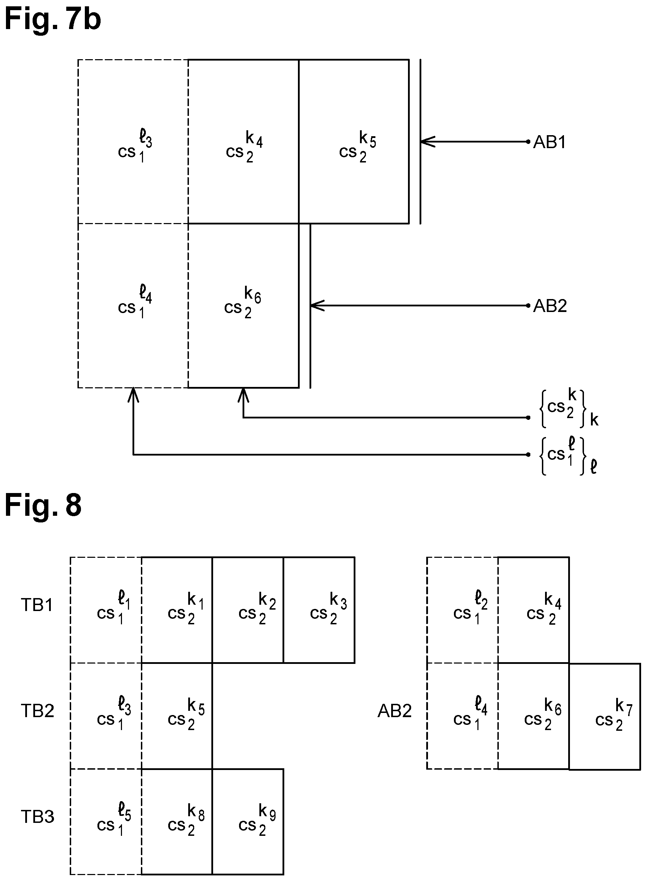

La figure 7b illustre un schéma simplifié d'interface utilisateur d'un générateur de deuxièmes traitements dans lequel une première carte et au moins une deuxième carte sont ajoutées dans la deuxième zone illustrée par la figure 5.

L'utilisateur U peut créer ou modifier un nouveau sous-bloc d'action AB2 en plus du sous-bloc d'action AB1 (cs₁^{l3}, cs₂^{k4}, cs₂^{k5}). En particulier, l'utilisateur initie une nouvelle ligne ou un nouveau sous-bloc AB2 avec une première carte cs₁^{l4}, tel qu'une première carte connecté au connecteur logique « THEN AFTER». L'utilisateur ajoute une deuxième carte cs₂^{k6} de cette première carte cs₁^{l4}.

Une ligne démarrée par l'opérateur « THEN » ou « THEN AFTER » initie un nouveau bloc d'action AB2 qui sera exécuté après le précédent bloc d'action AB1. En d'autres mots, dans l'exemple ci-dessus, la génération de deuxième traitement n'exécutera un sous bloc d'action AB2 seulement si l'exécution du bloc d'action précédent AB1 a été lancé préalablement quel que soit la résultante de cette exécution.

L'utilisateur peut ajouter le nombre de lignes d'actions qu'il souhaite.

La figure 8 illustre un schéma simplifié d'interface utilisateur d'un générateur de deuxièmes traitements selon l'invention dans le cas d'un deuxième traitement dit « complexe ».

Si l'utilisateur sélectionne des cartes telles que dans l'exemple de la figure 8 pour générer un deuxième traitement complexe, la génération de deuxième traitement génèrera des commandes dans l'ordre suivant:
- le premier sous-bloc ou bloc de condition TB1 comporte une première carte cs₁^{l1} et trois deuxièmes cartes cs₂^{k1}, cs₂^{k2}, cs₂^{k3}, la génération de deuxièmes traitements génère une commande de condition dans laquelle 3 conditions associées aux trois deuxièmes cartes cs₂^{k1}, cs₂^{k2}, cs₂^{k3} doivent être testées. Si l'exécution de la commande générée à partir du premier bloc de condition TB1 permet de valider toutes les conditions alors la commande générée à partir du premier bloc d'action AB1 comportant la deuxième carte cs₂^{k4} est exécutée. Sinon, la commande de condition générée à partir du deuxième bloc de condition TB2 est testée.
- le deuxième sous-bloc ou bloc de condition TB2 comporte une première carte cs₁^{l3} et une deuxième carte cs₂^{k5}, la génération de deuxièmes traitements génère une commande de condition dans laquelle la condition associée à la deuxième carte cs₂^{k5} doit être testée. Si l'exécution de la commande générée à partir du deuxième bloc de condition TB2 permet de valider cette condition alors la commande générée à partir du premier bloc d'action AB1 comportant la deuxième carte cs₂^{k4} est exécutée. Sinon, la commande de condition générée à partir du troisième bloc de condition TB3 est testée.
- le troisième sous-bloc ou bloc de condition TB3 comporte une première carte cs₁^{l5} et deux deuxièmes cartes cs₂^{k8}, cs₂^{kµ9}, la génération de deuxièmes traitements génère une commande de condition dans laquelle deux conditions associées aux trois deuxièmes cartes cs₂^{k8}, cs₂^{k9} doivent être testées. Sinon, les commandes générées à partir des blocs d'actions AB1, AB2 ne sont pas exécutées.
- Si la commande générée à partir du premier bloc d'action AB1 est exécutée, alors la(les) commande(s) générée(s) à partir du deuxième bloc d'action AB2 comportant les deux deuxièmes cartes cs₂^{k6}, cs₂^{k7} est exécutée après l'exécution de la commande générée à partir du premier bloc d'action AB1. Ainsi, les commandes générées à partir du premier bloc d'action AB1 peuvent être exécutées même si les commandes générées à partir du deuxième bloc d'action aB2 ne peuvent pas l'être mais les commandes générées à partir du deuxième bloc d'action aB2 ne peuvent être exécutées si les commandes générées à partir du premier bloc d'action AB1 ne peuvent pas l'être.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

## Revendications

1. Générateur de deuxièmes traitements fournissant des deuxièmes services, le deuxième traitement comportant au moins une commande d'un dispositif électronique, la commande déclenchant une action du dispositif électronique parmi les actions suivantes :
- une exécution d'une étape d'un procédé de premier traitement fournissant un premier service,
- un contrôle du dispositif électronique,
le générateur de deuxièmes traitements comportant un générateur de commandes en fonction de plusieurs premières cartes et de plusieurs deuxièmes cartes sélectionnées indépendamment respectivement parmi un ensemble de premières cartes et un ensemble de deuxièmes cartes, chaque première carte étant associée à un connecteur logique apte à être exécuté lors de l'exécution d'un deuxième traitement et chaque deuxième carte étant associée à un élément parmi les éléments suivants : un premier service et un dispositif électronique connecté à un contrôleur apte à mettre en oeuvre le deuxième traitement,
le générateur de commandes générant au moins une commande en fonction d'un ordre dans lequel les premières cartes et deuxièmes cartes sélectionnées sont positionnées.

2. Générateur de deuxièmes traitements selon la revendication précédente, le générateur de deuxièmes traitements comportant une interface utilisateur, l'interface utilisateur étant apte à afficher l'ensemble de première carte et l'ensemble de deuxième carte, étant apte à recevoir une instruction de sélection de premières cartes et de deuxième carte en fonction d'une action d'un utilisateur.

3. Générateur de deuxièmes traitements selon les revendications 2 et 3, dans lequel l'interface utilisateur étant apte à recevoir une commande d'ordonnancement des premières cartes et deuxièmes cartes sélectionnées.

4. Générateur de deuxièmes traitements selon l'une quelconque des revendications 2 à 4, dans lequel l'interface utilisateur comporte au moins une première zone d'affichage d'une partie des premières cartes et deuxièmes cartes sélectionnées et une deuxième zone d'affichage du reste des premières cartes et deuxièmes cartes sélectionnées, la première zone d'affichage étant associé à un déclencheur et la deuxième zone d'affichage à un contrôleur activé par le déclencheur.

5. Générateur de deuxièmes traitements selon l'une quelconque des revendications précédentes, dans lequel les premières cartes et deuxièmes cartes sont des cartes virtuelles disponibles dans une base de cartes.

6. Générateur de deuxièmes traitements selon l'une quelconque des revendications 1 à 5, dans lequel :
- les premières cartes et deuxièmes cartes sont des cartes physiques ;
- le générateur de deuxièmes traitements est connecté à un identificateur des premières cartes et deuxièmes sélectionnées.

7. Générateur de deuxièmes traitements selon la revendication précédente, le générateur de deuxièmes traitements comporte un analyseur de position des cartes connecté à un capteur de cartes, l'analyseur étant apte à fournir l'ordre des premières cartes et deuxièmes cartes sélectionnées.

8. Dispositif de fourniture de services comportant :
- une base de traitements comportant au moins des premiers traitements;
- un processeur apte à mettre en œuvre au moins un premier traitement ;
**caractérisé en ce que** le dispositif de fourniture de services comporte en outre :
- un générateur de deuxièmes traitements fournissant des deuxièmes services, le deuxième traitement comportant au moins une commande d'un dispositif électronique, la commande déclenchant une action du dispositif électronique parmi les actions suivantes :
+ une exécution d'une étape d'un procédé de premier traitement fournissant un premier service,
+ un contrôle du dispositif électronique,
le générateur de deuxièmes traitements comportant un générateur de commandes en fonction de plusieurs premières cartes et de plusieurs deuxièmes cartes sélectionnées indépendamment respectivement parmi un ensemble de premières cartes et un ensemble de deuxièmes cartes, chaque première carte étant associée à un connecteur logique apte à être exécuté lors de l'exécution d'un deuxième traitement et chaque deuxième carte étant associée à un élément parmi les éléments suivants : un premier service et un dispositif électronique connecté à un contrôleur apte à mettre en œuvre le deuxième traitement, le deuxième traitement généré étant apte à être mis en œuvre par le processeur,
le générateur de commandes générant au moins une commande en fonction d'un ordre dans lequel les premières cartes et deuxièmes cartes sélectionnées sont positionnées.

9. Dispositif de fourniture de services selon la revendication précédente, le dispositif de fourniture de service comportant un enregistreur apte à mémoriser le deuxième traitement généré dans la base de traitements.

10. Procédé de génération d'un deuxième traitement fournissant des deuxièmes services, le deuxième traitement comportant au moins une commande d'un dispositif électronique, la commande déclenchant une action du dispositif électronique parmi les actions suivantes :
- une exécution d'une étape d'un procédé de premier traitement fournissant un premier service,
- un contrôle du dispositif électronique,
la génération de deuxièmes traitements comportant une génération de commandes en fonction de plusieurs premières cartes et de plusieurs deuxièmes cartes sélectionnées indépendamment respectivement parmi un ensemble de premières cartes et un ensemble de deuxièmes cartes, chaque première carte étant associée à un connecteur logique apte à être exécuté lors de l'exécution d'un deuxième traitement et chaque deuxième carte étant associée à un élément parmi les éléments suivants : un premier service et un dispositif électronique connecté à un contrôleur apte à mettre en œuvre le deuxième traitement,
la génération de commandes générant au moins une commande en fonction d'un ordre dans lequel les premières cartes et deuxièmes cartes sélectionnées sont positionnées.

11. Procédé de génération d'un deuxième traitement selon la revendication précédente, dans lequel la génération de deuxièmes traitements comporte plusieurs sélections de premières cartes parmi l'ensemble de premières cartes et, indépendamment des sélections de premières cartes, plusieurs sélections de deuxièmes cartes parmi l'ensemble de deuxième carte, une sélection étant fonction d'au moins une instruction de sélection.

12. Procédé de génération d'un deuxième traitement selon l'une quelconques des revendications 11 ou 12, dans lequel la génération de deuxièmes traitements comporte un ordonnancement des premières cartes et deuxièmes cartes sélectionnées en fonction d'au moins une instruction d'ordonnancement.

13. Procédé de génération d'un deuxième traitement selon l'une quelconque des revendications 12 ou 13, dans lequel l'instruction est fonction d'une action d'un utilisateur.

14. Procédé de génération d'un deuxième traitement selon l'une quelconque des revendications 11 à 14, dans lequel le procédé de génération comporte un affichage au moyen d'une interface utilisateur d'une première zone d'affichage d'une partie des premières cartes et deuxièmes cartes sélectionnées indépendamment et d'une deuxième zone d'affichage du reste des premières cartes et deuxièmes cartes sélectionnées indépendamment, la première zone d'affichage étant associé à un déclencheur et la deuxième zone d'affichage à un contrôleur activé par le déclencheur.

15. Programme comprenant des instructions de code de programme pour l'exécution des étapes du procédé de génération de deuxièmes traitements selon l'une quelconque des revendications 10 à 14 lorsque ledit programme est exécuté par un processeur.

## Patentansprüche

1. Generator von zweiten Verarbeitungen, der zweite Dienste bereitstellt, wobei die zweite Verarbeitung mindestens einen Befehl einer elektronischen Vorrichtung umfasst, wobei der Befehl eine Aktion der elektronischen Vorrichtung unter den folgenden Aktionen auslöst:
- ein Ausführen eines Schritts eines Verfahrens zur ersten Verarbeitung, das einen ersten Dienst bereitstellt,
- ein Steuern der elektronischen Vorrichtung,
wobei der Generator von zweiten Verarbeitungen einen Generator von Befehlen in Abhängigkeit von mehreren ersten Karten und von mehreren zweiten Karten umfasst, die jeweils unabhängig aus einem Satz erster Karten und einem Satz zweiter Karten ausgewählt sind, wobei jede erste Karte einem logischen Verbinder zugeordnet ist, der geeignet ist, bei der Ausführung einer zweiten Verarbeitung ausgeführt zu werden, und wobei jede zweite Karte einem Element unter den folgenden Elementen zugeordnet ist: einem ersten Dienst und einer elektronischen Vorrichtung, die mit einem Controller verbunden ist, der geeignet ist, die zweite Verarbeitung durchzuführen,
wobei der Generator von Befehlen mindestens einen Befehl in Abhängigkeit von einer Reihenfolge erzeugt, in der die ausgewählten ersten Karten und zweiten Karten positioniert sind.

2. Generator von zweiten Verarbeitungen nach dem vorhergehenden Anspruch, wobei der Generator von zweiten Verarbeitungen eine Benutzerschnittstelle umfasst, wobei die Benutzerschnittstelle geeignet ist, den Satz erster Karten und den Satz zweiter Karten anzuzeigen, wobei er geeignet ist, eine Anweisung zum Auswählen von ersten Karten und von zweiten Karten in Abhängigkeit von einer Aktion eines Benutzers zu empfangen.

3. Generator von zweiten Verarbeitungen nach den Ansprüchen 2 und 3, wobei die Benutzerschnittstelle geeignet ist, einen Befehl zum Anordnen der ausgewählten ersten Karten und zweiten Karten zu empfangen.

4. Generator von zweiten Verarbeitungen nach einem der Ansprüche 2 bis 4, wobei die Benutzerschnittstelle mindestens einen ersten Anzeigebereich für einen Teil der ausgewählten ersten Karten und zweiten Karten und einen zweiten Anzeigebereich für den Rest der ausgewählten ersten Karten und zweiten Karten umfasst, wobei der erste Anzeigebereich einem Auslöser und der zweite Anzeigebereich einem durch den Auslöser aktivierten Controller zugeordnet ist.

5. Generator von zweiten Verarbeitungen nach einem der vorhergehenden Ansprüche, wobei die ersten Karten und zweiten Karten virtuelle Karten sind, die in einer Kartenbasis verfügbar sind.

6. Generator von zweiten Verarbeitungen nach einem der Ansprüche 1 bis 5, wobei:
- die ersten Karten und zweiten Karten physische Karten sind;
- Generator von zweiten Verarbeitungen mit einem Identifizierer der ausgewählten ersten und zweiten Karten verbunden ist.

7. Generator von zweiten Verarbeitungen nach dem vorhergehenden Anspruch, wobei der Generator von zweiten Verarbeitungen einen Kartenpositionsanalysator umfasst, der mit einem Kartensensor verbunden ist, wobei der Analysator geeignet ist, die Reihenfolge der ausgewählten ersten Karten und zweiten Karten bereitzustellen.

8. Vorrichtung zur Bereitstellung von Diensten, umfassend:
- eine Verarbeitungsbasis, die mindestens erste Verarbeitungen umfasst;
- einen Prozessor, der geeignet ist, mindestens eine erste Verarbeitung durchzuführen;
**dadurch gekennzeichnet, dass** die Vorrichtung zur Bereitstellung von Diensten ferner umfasst:
- einen Generator von zweiten Verarbeitungen, der zweite Dienste bereitstellt, wobei die zweite Verarbeitung mindestens einen Befehl einer elektronischen Vorrichtung umfasst, wobei der Befehl eine Aktion der elektronischen Vorrichtung unter den folgenden Aktionen auslöst:
+ ein Ausführen eines Schritts eines Verfahrens zur ersten Verarbeitung, das einen ersten Dienst bereitstellt,
+ ein Steuern der elektronischen Vorrichtung,
wobei der Generator von zweiten Verarbeitungen einen Generator von Befehlen in Abhängigkeit von mehreren ersten Karten und von mehreren zweiten Karten umfasst, die jeweils unabhängig aus einem Satz erster Karten und einem Satz zweiter Karten ausgewählt sind, wobei jede erste Karte einem logischen Verbinder zugeordnet ist, der geeignet ist, bei der Ausführung einer zweiten Verarbeitung ausgeführt zu werden, und wobei jede zweite Karte einem Element unter den folgenden Elementen zugeordnet ist: einem ersten Dienst und einer elektronischen Vorrichtung, die mit einem Controller verbunden ist, der geeignet ist, die zweite Verarbeitung durchzuführen, wobei die erzeugte zweite Verarbeitung geeignet ist, von dem Prozessor durchgeführt zu werden, wobei der Generator von Befehlen mindestens einen Befehl in Abhängigkeit von einer Reihenfolge erzeugt, in der die ausgewählten ersten Karten und zweiten Karten positioniert sind.

9. Vorrichtung zur Bereitstellung von Diensten nach dem vorhergehenden Anspruch, wobei die Vorrichtung zur Bereitstellung von Diensten einen Registrierer umfasst, der geeignet ist, die erzeugte zweite Verarbeitung in der Verarbeitungsbasis zu speichern.

10. Verfahren zum Erzeugen einer zweiten Verarbeitung, das zweite Dienste bereitstellt, wobei die zweite Verarbeitung mindestens einen Befehl einer elektronischen Vorrichtung umfasst, wobei der Befehl eine Aktion der elektronischen Vorrichtung unter den folgenden Aktionen auslöst:
- ein Ausführen eines Schritts eines Verfahrens zur ersten Verarbeitung, das einen ersten Dienst bereitstellt,
- ein Steuern der elektronischen Vorrichtung,
wobei das Erzeugen von zweiten Verarbeitungen ein Erzeugen von Befehlen in Abhängigkeit von mehreren ersten Karten und von mehreren zweiten Karten umfasst, die jeweils unabhängig aus einem Satz erster Karten und einem Satz zweiter Karten ausgewählt sind, wobei jede erste Karte einem logischen Verbinder zugeordnet ist, der geeignet ist, bei der Ausführung einer zweiten Verarbeitung ausgeführt zu werden, und wobei jede zweite Karte einem Element unter den folgenden Elementen zugeordnet ist: einem ersten Dienst und einer elektronischen Vorrichtung, die mit einem Controller verbunden ist, der geeignet ist, die zweite Verarbeitung durchzuführen,
wobei das Erzeugen von Befehlen mindestens einen Befehl in Abhängigkeit von einer Reihenfolge erzeugt, in der die ausgewählten ersten Karten und zweiten Karten positioniert sind.

11. Verfahren zum Erzeugen einer zweiten Verarbeitung nach dem vorhergehenden Anspruch, wobei das Erzeugen von zweiten Verarbeitungen mehrere Auswahlen von ersten Karten aus dem Satz erster Karten und, unabhängig von den Auswahlen von ersten Karten, mehrere Auswahlen von zweiten Karten aus dem Satz zweiter Karten umfasst, wobei eine Auswahl von mindestens einer Auswahlanweisung abhängig ist.

12. Verfahren zum Erzeugen einer zweiten Verarbeitung nach einem der Ansprüche 11 oder 12, wobei das Erzeugen von zweiten Verarbeitungen ein Anordnen der ausgewählten ersten Karten und zweiten Karten in Abhängigkeit von mindestens einer Anordnungsanweisung umfasst.

13. Verfahren zum Erzeugen einer zweiten Verarbeitung nach einem der Ansprüche 12 oder 13, wobei die Anweisung von einer Aktion eines Benutzers abhängig ist.

14. Verfahren zum Erzeugen einer zweiten Verarbeitung nach einem der Ansprüche 11 bis 14, wobei das Verfahren zum Erzeugen eine Anzeige mittels einer Benutzerschnittstelle eines ersten Anzeigebereichs für einen Teil der unabhängig ausgewählten ersten Karten und zweiten Karten und eines zweiten Anzeigebereichs für den Rest der unabhängig ausgewählten ersten Karten und zweiten Karten umfasst, wobei der erste Anzeigebereich einem Auslöser und der zweite Anzeigebereich einem durch den Auslöser aktivierten Controller zugeordnet ist.

15. Programm, das Programmcodeanweisungen umfasst, die bei der Ausführung des Programms durch einen Prozessor die Schritte des Verfahrens zum Erzeugen von zweiten Verarbeitungen nach einem der Ansprüche 10 bis 14 ausführen.

## Claims

1. Generator of second processing operations providing second services, the second processing operation comprising at least one command for an electronic device, the command triggering an action from the electronic device from among the following actions:
- execution of a step of a method for a first processing operation providing a first service,
- control of the electronic device,
the generator of second processing operations comprising a generator of commands as a function of multiple first cards and of multiple second cards selected independently from among a set of first cards and a set of second cards, respectively, each first card being associated with a logic connector able to be executed during the execution of a second processing operation and each second card being associated with one element from among the following elements: a first service and an electronic device connected to a controller able to implement the second processing operation,
the command generator generating at least one command as a function of an order in which the selected first cards and second cards are positioned.

2. Generator of second processing operations according to the preceding claim, the generator of second processing operations comprising a user interface, the user interface being able to display the set of first cards and the set of second cards, being able to receive an instruction for selecting first cards and second cards as a function of an action from a user.

3. Generator of second processing operations according to Claims 2 and 3, in which the user interface is able to receive a command for scheduling the selected first cards and second cards.

4. Generator of second processing operations according to any one of Claims 2 to 4, in which the user interface comprises at least one first region for displaying a portion of the selected first cards and second cards and a second region for displaying the rest of the selected first cards and second cards, the first display region being associated with a trigger and the second display region with a controller activated by the trigger.

5. Generator of second processing operations according to any one of the preceding claims, in which the first cards and second cards are virtual cards available in a card base.

6. Generator of second processing operations according to any one of Claims 1 to 5, in which:
- the first cards and second cards are physical cards;
- the generator of second processing operations is connected to an identifier of the selected first and second cards.

7. Generator of second processing operations according to the preceding claim, the generator of second processing operations comprising a position analyzer for analyzing the position of the cards which is connected to a card sensor, the analyzer being able to provide the order of the selected first cards and second cards.

8. Service provision device comprising:
- a processing operation base comprising at least first processing operations;
- a processor able to implement at least one first processing operation;
**characterized in that** the service provision device further comprises:
- a generator of second processing operations providing second services, the second processing operation comprising at least one command for an electronic device, the command triggering an action from the electronic device from among the following actions:
+ execution of a step of a method for a first processing operation providing a first service,
+ control of the electronic device,
the generator of second processing operations comprising a generator of commands as a function of multiple first cards and of multiple second cards selected independently from among a set of first cards and a set of second cards, respectively, each first card being associated with a logic connector able to be executed during the execution of a second processing operation and each second card being associated with one element from among the following elements: a first service and an electronic device connected to a controller able to implement the second processing operation, the generated second processing operation being able to be implemented by the processor,
the command generator generating at least one command as a function of an order in which the selected first cards and second cards are positioned.

9. Service provision device according to the preceding claim, the service provision device comprising a recorder able to store the generated second processing operation in the processing operation base.

10. Method for generating a second processing operation providing second services, the second processing operation comprising at least one command for an electronic device, the command triggering an action from the electronic device from among the following actions:
- execution of a step of a method for a first processing operation providing a first service,
- control of the electronic device,
the generation of second processing operations comprising a generation of commands as a function of multiple first cards and of multiple second cards selected independently from among a set of first cards and a set of second cards, respectively, each first card being associated with a logic connector able to be executed during the execution of a second processing operation and each second card being associated with one element from among the following elements: a first service and an electronic device connected to a controller able to implement the second processing operation,
the command generation generating at least one command as a function of an order in which the selected first cards and second cards are positioned.

11. Method for generating a second processing operation according to the preceding claim, in which the generation of second processing operations comprises multiple selections of first cards from among the set of first cards and, independently of the selections of first cards, multiple selections of second cards from among the set of second cards, a selection being a function of at least one selection instruction.

12. Method for generating a second processing operation according to either of Claims 11 and 12, in which the generation of second processing operations comprises scheduling of the selected first cards and second cards as a function of at least one scheduling instruction.

13. Method for generating a second processing operation according to either of Claims 12 and 13, in which the instruction is a function of an action from a user.

14. Method for generating a second processing operation according to any one of Claims 11 to 14, in which the generating method comprises displaying, by means of a user interface, a first region for displaying a portion of the independently selected first cards and second cards and a second region for displaying the rest of the independently selected first cards and second cards, the first display region being associated with a trigger and the second display region with a controller activated by the trigger.

15. Program comprising program code instructions for executing the steps of the method for generating second processing operations according to any one of Claims 10 to 14 when said program is executed by a processor.
